# EUROPEAN PATENT SPECIFICATION

(11) **EP 1 232 605 B1**
(45) Date of publication and mention of the grant of the patent: **31.08.2005**
(21) Application number: 00977834.1
(22) Date of filing: 19.11.2000
(51) Int. Cl.: H04L 12/12, H04L 12/56, H04L 12/24

(54) **METHOD AND SYSTEM FOR MANAGEMENT OF NETWORK DOMAINS**
VERFAHREN UND SYSTEM ZUR VERWALTUNG VON NETZWERKBEREICHEN
PROCEDE ET SYSTEME POUR LA GESTION DE DOMAINES DE RESEAU

(30) Priority: 22.11.1999 IL 13308399
(43) Date of publication of application: 21.08.2002
(73) Proprietor: ECI TELECOM LTD., 49517 Petach Tikva (IL)
(72) Inventor: KOPELOVITZ, Beni, 44378 Kfar Sava (IL); MALKOSH, Menachem, 76211 Rechovot (IL); BEN-ZOOR, Avshalom, 45246 Hod Hasharon (IL); VERSHKOV, Alexander, 75245 Rishon Lezion (IL); ZIMMERMAN, Yakov, 44814 Elkana (IL)
(74) Representative: Mather, Belinda Jane
(86) International application number: PCT/IL2000/000768
(87) International publication number: WO 2001/039437

(56) References cited:
- EP-A- 0 845 919
- WO-A-98/59462
- US-A- 5 115 495
- US-A- 5 894 547

## Description

### FIELD AND BACKGROUND OF THE INVENTION

The present invention relates to a method and a system for managing network domains, and in particular, to a method and system for efficiently determining an acceptable route within a network, such as finding a protected pathway between two access points according to user-designated path information. Preferably, the present invention is employed for telecommunications networks, for example for connecting telephone exchanges and/or customer data equipment with service providers.

Networks are widely used for communication between computers, and provide the physical media through which the data flows. Networks are also used for transport of data among telecommunication equipment, such as telephone exchanges. Depending upon the type of network protocol according to which network traffic is directed, various types of hardware devices are used to physically connect each telecommunications device to a transport medium, such as optical fibers and/or electrical cables. The computers or telecommunications equipment can then communicate by exchanging data.

All of these connections require specialized hardware devices, known as network elements, which are connected by the transport medium. These network elements must be recognized and managed by network management systems (NMS). A network may be composed of a plurality of management domains, each managed by a separate network management system. Overall network management is then controlled by an overall, upper level network management system (UNMS), which communicates with the NMS for each domain. When the UNMS requires a management service in a particular network domain, this service is requested from the NMS for that particular domain.

One example of such a management service is determining a protected path between two network access points. Various path-finding algorithms may be employed generally to find the best route between two such access points, incorporating such factors as current traffic loads on different sections of the network, the number of network elements through which the data must pass on a particular path, and the bandwidth of the network, as well as other characteristics. In order to provide uninterrupted service, both a main path and an alternate path may be determined, such that if the main path fails, the data may continue to be transmitted through the alternate path. The combination of the main path and the alternate path is termed a "protected path".

One important criterion for determining such a protected path is that the two component paths should not share common transport medium components, and in particular should not have a common fiber bundle through which data is passed. Otherwise, if the two different pathways are provided through overlapping components, a single fault in the system could disable both pathways and therefore prevent the data from being transported. For example, if both paths share a common bundle of fibers for the transport medium, cutting or otherwise disabling transport of data through this bundle would prevent data from being transported according to either path, resulting in an interruption of service.

In order to prevent such a service interruption, the alternate path must not share common components, particularly the transport medium ones, with the main path. Within a single network domain, such separation is relatively simple to maintain, as the NMS for that domain is able to route the alternate path such that it does not pass through components common also to the main path.

A more difficult problem is to route such a protected path between access points in a multi-domain network. Such a path is typically routed by the UNMS, which first selects an access point on the boundary between the two network domains. Next, the UNMS sends a request to both domain NMS's, asking each one to find a path from the original access point within that domain to the selected access point on the boundary. Together, the two paths constitute the routed path between the network domains. One drawback of this method for routing protected paths between domains is that since different domain network management systems are performing each portion of the path routing, an alternate path may be chosen which uses components, particularly fiber bundles in the transport medium, common to the main path. Thus, such a method could easily fail to provide the required "back-up" for the alternate path, since both paths could become inoperative from a single failure in the component of the transport medium.

One attempted solution, which is known in the art, requires the UNMS to receive information about the components of the transport medium which are used to form the main path in one network domain. The UNMS must then instruct the NMS of the second domain as to whether these components should be used to find the path in the second domain. As noted previously, the NMS for a particular domain can avoid the overlapping use of such common components *within* a particular network domain. For example, if a particular fiber bundle is used for the main path in the first domain, this bundle should therefore not be used as part of the alternate path in the second domain, such that the NMS for the second network domain must receive specific instructions to that effect.

Unfortunately, there are several disadvantages to this solution. First, the entire process of selecting the alternate path requires a longer period of time to complete, since the UNMS cannot activate the NMS for the second network domain until the NMS for the first network domain has determined the alternate path. Optimally, the NMS for each network domain could operate in parallel, thereby saving a significant amount of time.

Furthermore, returning such transport medium component information to the UNMS complicates the interface between the UNMS and the network domain NMS. In addition, the UNMS must know how to determine whether this information should be transferred to the network domain NMS. Alternatively, the process could require the intervention of a human operator, such that it would no longer be automatic. Finally, if the second network domain NMS fails to find a suitable alternate path, the entire process must be performed again from the very beginning, with different routes and different transport medium components, such that the process becomes further complicated and more time consuming.

An alternate solution is for network domain network management systems to directly exchange such transport medium component information. The disadvantages to this solution include the requirement for an additional interface in each network domain NMS in order to permit such direct communication, resulting in added complexity for the NMS. Furthermore, a standard would be required for such an additional interface in order for the network domain NMS of different manufacturers to be able to communicate. Such a standard does not exist today. Also, each additional network domain which is involved in the routing of the path increases the complexity of the task of communication. Thus, such a solution has many disadvantages.

Furthermore, other purported solutions which have been disclosed in the art fail to fully solve this problem. For example, U.S. Patent No. 5,671,215 discloses a system in which message cells in an ATM (asynchronous transfer mode) network are provided with two internal cell headers, one for the main path and one for the alternate path. This system enables such message cells to be duplicated only at points in the network at which the two paths divide, thereby reducing the load on the network. However, such a system does not solve the initial problem of selecting the alternate path such that the transport medium components of this path do not overlap with those components of the main path.

European Patent No. EP 0404337 discloses a mesh connected network, which has the inherent advantage of providing several communication paths between two access points. However, this is a highly specialized type of network, and does not provide a solution to the problem for currently used networks. Thus, the disclosed network also does not solve the problem of selecting the alternate path without overlapping transport medium components for the typical network.

European patent application publication number EP 0845919 describes a method for use in network restoration. For restoration of a network, a plurality of possible alternative routes are determined. Messages are passed between nodes along the alternative routes to determine a spare capacity of each link in the alternative routes. An alternative route is selected from the possible alternative routes on the basis of a database of the determined link spare capacities for each of the possible alternative routes, built up at a chooser node at one site of the failed part of the network.

Therefore, there is an unmet need for, and it would be highly useful to have, a system and a method for determining an alternate path between network domains such that the transport medium components of the alternate path do not overlap with those of the main path, and such that the process of selecting such an alternate path is rapid and efficient, particularly for telecommunications networks, such as for connecting telephone exchanges and/or customer data equipment with service providers.

### SUMMARY OF THE INVENTION

The system and method of the present invention are for link attribute management of network domains, and in particular for determining a route between a plurality of network domains in a network according to at least one routing criterion. The path attributes are preferably stored in a database, and are used in order to determine a suitable path for data transport within the plurality of network domains. The particular desired outcome for selecting the path depends upon the nature of the path and the type of attributes which are selected for determining the path.

The present invention is employed for telecommunications networks, for example for connecting multiple network domains intended for transmitting voice, fax, data etc. between network elements such as exchanges, gateways, telephones, computers, etc.. Hereinafter, the term "network" refers to a connection between two or more network elements which enables these elements to communicate, including but not limited to a LAN (local area network), a WAN (wide area network) and the Internet, as well as a telecommunication transport network.

The transport medium between the network elements on the network may optionally be in the form of optical fibers, electrical cables or radio links connecting the network elements either directly or via satellite.

The above objective can be achieved by providing a method for management of a network domain formed from network elements interconnected with links, wherein each link comprises at least one transport medium component. The method comprises steps of:
a) providing an NMS (network management system) of the network domain;
b) providing a link attribute database associated with the NMS and incorporating link attribute data comprising a plurality of user attributes and values thereof assigned to each link existing in the network domain,
c) applying to said link attribute database at least one instruction for processing said link attribute data according to at least one of said user attributes.

In the frame of the present description and claims, the link attribute database should be understood as stored systemized data, preferably being arranged with the aid of a computer memory means.

According to the preferred version of the method, the user attributes being features characterizing a link and are selected from a non-exhaustive list comprising: type of the transport medium component, individual identifier of said medium component, group (and sometimes, family) to which said medium component belongs, length, quality, and external distinctive properties of said transport medium component,
said values of the user attributes being respectively indications of the type, identifier and group of the medium component, indication of the length, estimation of the quality, indication of a respective housing of said component, and
said type of the transport medium component being selected from a non-exhaustive list comprising: an optic fiber medium, an electrically conductive medium, a transceiver of a wireless telecommunication link.

It should be noted that the user attributes can arbitrarily be chosen by the network user, therefore the link attribute data base is adapted to be easily modified and updated by the user without any consequences to the NMS.

In one widely used example, the type of the transport medium component is optic fiber medium, and said user attributes respectively designate individual identifier of the optical fiber in the bundle, identifier of the bundle, sometimes - identifier of the optical cable comprising the bundle, length of the fiber, quality of the optic link, color of the protection coating of the bundle or the cable.

The above-described method can be used, for example, for routing in a network domain via links which have at least a particular value of quality of a selected medium, wherein the quality is one of the user attributes.

Alternatively or additionally, the path may optionally be routed through optic fiber links which belong to a particular company, which may be identified according to the color of the cables of the link, for example (the color being one of the user attributes).

Yet another example of the operation of the present invention is for evaluating the overall quality of an existing path, for example in order to determine the average fiber quality of a particular network domain, and consequently, of a network combined from a number of such network domains.

According to the preferred version of the method, the processing in step c) comprises determining a path in said network domain, and said instruction orders selection, for said path, of one or more links according to said at least one user attribute; the instruction comprises a logical condition using said one or more user attributes and their values.

For example, the instruction may comprise selection for the path of links that have a particular type of the medium component and have specific values of some user attributes (say, a specific group of the medium components).

The above method of determining a path enables to effectively determine a protected path in a network domain by determining a main path as explained above, and determining an alternate path in an analogous manner wherein said at least one instruction applied to the link attribute database at step c) is a so-called alternate instruction for preventing the links forming the main path from being included in the alternate path.

In practice, the alternate instruction comprises a logical condition using said one or more user attributes and their values in a manner excluding the use in the alternate path of transport medium components selected for the main path by said at least one appropriate instruction.

For example, the logical condition of the alternate instruction may prohibit selection for the alternate path of links that:
- have the same type of the medium component as the links forming the main path, or
- have values of at least one of the following user attributes in common with the links forming the main path: individual identifier of the transport medium hardware component, group or even family of said medium components (if allowing the same medium type to be used).

One of the specific objectives of the invention can be achieved by providing a method for determining a path in a network composed of multiple network domains, the network comprising at least a first network domain and a second network domain having a common border, each formed from network elements interconnected by links; the path connects network elements belonging to different said network domains and includes links each comprising at least one transport medium component;
the method comprises:
performing a first path section of said path by applying the above-described steps to said first network domain, wherein
said NMS being the first NMS provided for the first network domain, said link attribute database being the first link attribute database associated with said first NMS and incorporating the link attribute data concerning a plurality of user attributes and values thereof assigned to each link of said first network domain;
determining a second path section in the second network domain by applying the described steps to said second domain respectively associated with the second NMS, the second link attribute database and the second link attribute data; the second path section being connectable to the first path section; while
translating user attributes and values thereof used in said at least one instruction applied to the first network domain into respective user attributes and values thereof assigned in the second network domain, to be used in the at least one instruction applied to the second network domain, to maintain consistency of said user attributes and values thereof and thereby consistency of said instructions in different network domains of the network; the translation being provided by said first NMS serving as an upper level NMS (UNMS).

Further , there is provided a method for determining a path in a network composed of multiple network domains interconnected by a plurality of links existing there-between, the network comprising at least a first low level network domain, a second low level network domain, each formed from network elements interconnected by links, and a upper level network domain comprising the plurality of links existing between said first and said second low level network domains; the path should connect network elements respectively belonging to said first and second network domains, and should include links each comprising at least one transport medium component, the method comprises:
determining in said upper level network domain a connecting path between the first low level network domain and the second low level network domain, wherein
said NMS being the UNMS provided for the upper level network domain, said link attribute database being the upper level link attribute database associated with said UNMS and incorporating upper level link attribute data concerning a plurality of user attributes and values thereof assigned to each link of said upper level network domain;
determining a first path section in the first low level network domain having respectively associated therewith a first low level NMS and a first low level link attribute database;
determining a second path section in the second low level network domain having respectively associated therewith a second low level NMS, a second low level link attribute database, while
translating, by said UNMS, user attributes and values thereof used in said at least one instruction applied to the upper level network domain into respective user attributes and values thereof assigned in the first and second network domains (and optionally *vice versa*), to be used in the instructions respectively applied to said first and second network domains in order to maintain consistency of said user attributes and values thereof and thereby consistency of said instructions in different network domains of the network.

In the ideal case, the same attributes have the same names and all values have the same interpretation in all NMSs in different network domains.

The UNMS issues said at least one instruction while providing time scheduling of the method steps.

For example, the method may include firstly determining the connecting path section to obtain border points, and thereupon determining said first and said second path sections simultaneously, using the border points.

If any one of said first and second path sections cannot be determined, the method provides re-determining of said connecting path up to finally completing the path after a number of iterations.

According to the most preferred version of the inventive method, it is intended for determining a protected path in the network comprising multiple network domains; the method further comprises determining an alternate path in addition to the determined (main) path; namely:
- determining alternate path sections to respective main path sections in each of said network domains, while applying to each of the respective link attribute databases at least one alternate instruction for preventing the links forming any of the main path sections from being included in any of the alternate path sections.
   The mentioned alternate instruction comprises an alternate logical condition using said one or more user attributes and their values, said alternate logical condition serving for excluding the use in the alternate path of transport medium components selected for the main path by said at least one respective instruction.
   For example, the alternate logical condition of the alternate instruction may prohibit selecting, for any alternate path section, links that
- have the same type of the medium component as the links forming a particular main path section according to said at least one instruction, or
- have values of at least one of the following user attributes in common with the links forming any of the main path sections according to said at least one instruction: individual identifier of the transport medium component, group of said transport medium components and, optionally, family of said components (if the common type of medium is allowed).

It can be seen that, owing to maintaining consistency of the respective user attributes and their values in different network domains by the UNMS, the method ensures that links of the alternate path will definitely not share any individual transport medium component used in the links of the main path; if desired, the alternate path will not include also the group of the transport medium components including this particular component, and even the family including the specified group.

According to a second aspect of the invention, there is provided a system for routing a protected path between a plurality of network domains in a network, the network comprising at least a first network domain and a second network domain, the protected path comprising a main path and an alternate path, each of the main path and the alternate path being composed of a plurality of links forming respective path sections in the network domains , the system comprising:
(a) a first domain NMS (network management system) for managing the first network domain;
(b) a first link attribute database associated with said first domain NMS for storing link attribute data comprising a plurality of user attributes and values thereof assigned to each link existing in the first network domain;
(c) a second domain NMS for managing the second network domain;
(d) a second link attribute database associated with said second domain NMS for storing link attribute data comprising a plurality of user attributes and values thereof assigned to each link existing in the second network domain;
one of said NMS serving as an upper level NMS (UNMS) capable of maintaining consistency between said user attributes and values thereof in the first and second databases, and of applying to both of said network domains one instruction to determine in each of them a main path section according to said at least one user attribute, and one alternate instruction to determine in each of them an alternate path section according to said at least one user attribute, said alternate instruction determining whether to include a particular link in any of the alternate path sections such, that each of the alternate path sections do not share a transport medium component used in any of the main path sections.

### BRIEF DESCRIPTION OF THE DRAWINGS

The invention is herein described, by way of example only, with reference to the accompanying drawings, wherein:
FIG. 1 is a schematic block diagram of an illustrative network for use with the present invention; and
FIG. 2 is a flowchart of an illustrative method according to the present invention.

### DESCRIPTION OF THE PREFERRED EMBODIMENTS

The system and method of the present invention will be illustrated and described below using an example of determining a protected path for uninterrupted transport of data between a plurality of network domains in a network. It is understood that this is for the purposes of example only and is not intended to be limiting in any way.

The protected path includes a main path and an alternate path which does not include a transport medium component in common with the main path. Each such path is composed of a plurality of links. The term "transport medium component" refers to a part of the physical layer for data transport on a network, and could be a fiber in a fiber bundle, for example. By avoiding the inclusion of such a common component in both the alternate path and the main path, a disruption of the functioning of any one component does not prevent the data from being sent through the network.

The system and method of the present invention feature at least one user attribute, which associates at least one transport medium component with the main path and which is preferably stored in a database. Preferably, the user attribute is entered manually by the user. A domain network management system (NMS) then receives an instruction to determine the alternate path according to the user attribute. For example, the instruction may state that the path should not include a particular transport medium component as designated by the user attribute. Preferably, each transport medium component is associated with a link, such that the domain NMS is able to determine the desired path according to an instruction to either use a particular link or else not to use the link for forming the path. Thus, the system and method of the present invention enable the path to be more rapidly and efficiently determined, according to the guidelines of the user attributes.

Other examples of user attributes which could be used for selecting the network path include, but are not limited to, the type of transport medium component (such as optical fiber, electric cable, wireless communication, and so forth), the particular component (say, optical fiber's identifier) used, the particular group (bundle of optical fibers) in use, family of bundles (if exists), the length of the link between two network elements, the color of the coating and the quality of the link. Each such user attribute is stored with a value or values for each link which could form such a path. For example, for a particular link the value for "the group " user attribute could be the type of the group expressed by a number or another symbol identifying the bundle of optical fibers, the color attribute could be associated with the value "blue", and the quality attribute could be associated with the value of the quality coefficient.

Optionally and preferably, the attributes and values which are assigned to each link are arbitrary, such that the NMS software does not need to be upgraded whenever a new attribute or value is required. Also optionally and preferably, the database can be updated by the user both with regard to the attributes and to the values for those attributes. Alternatively, the database may be updated automatically. Preferably but not necessarily, the same attributes have the same names and all values have the same interpretation among all NMS's in different network domains. However, this preferred feature need not be enforced if the UNMS understands the various definitions of the user attributes and the associated values for each NMS of the different network domains.

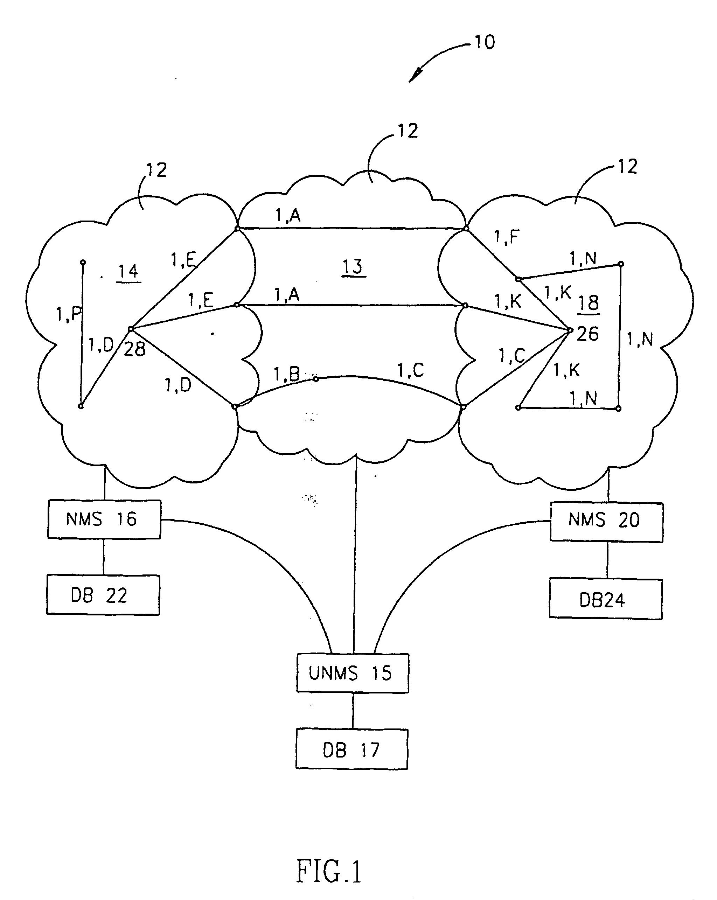

Referring now to the drawings, Figure 1 is a schematic block diagram of an exemplary network for use with one version of the method of the present invention. A network **10** is divided into a plurality of domains **12,** of which three are shown for the purposes of description only and without any intention of being limiting. A first network domain **14** is managed by a first domain NMS **16,** second network domain **18** is managed by a second domain NMS **20,** and inter-domain links (**13**) (in a so-called upper level network domain) which connect the first and the second domains, and is controlled by an upper level NMS (UNMS **15**). First domain NMS **16** has an associated first domain NMS database **22,** second domain NMS **20** has an associated second domain NMS database **24,** while the upper level domain UNMS **15** is provided with associated database **17**. Both first domain NMS **16** and second domain NMS **20** are managed and controlled by a UNMS **15.**

Each domain NMS database (**22, 24** and **17**) constitutes a link attribute database and stores link attribute information about each transport medium connection (link) within network **10,** such as the fibers connecting the network elements. This link attribute data is stored in the form of "user attributes" and "values" information. Preferably, such information is stored as individual items, such that up to *n* items of information are stored per component, each of which is designated as "user attribute 1", "user attribute 2" and so forth through "user attribute *n*". The physical or logical values for each user attribute item are preferably entered by a human operator, more preferably through the GUI (graphical user interface) of first network domain NMS **16,** second network domain NMS **20** and upper level domain UNMS **15.** Alternatively and preferably, these values are entered automatically, for example from a MIB (management information database), although a description of such a function is beyond the scope of the present invention.

When providing an operation of determining a path, an instruction applied to a particular NMS will comprise a logical condition including at least one user attribute with its value. The value for the user attribute indicated in the instruction should be understood as a criterion for how the path should be determined through this network domain **12.** If a protected path is to be determined across the network domains 12, at least two instructions, respectively intended to forming the main path and the alternate path, should define the attributes and values such, that connections across network domains **12** do not involve common components for both the main path and the alternate path, as described in greater detail below.

First network domain **14** is connected to a second network domain **18** through a plurality of transport medium components belonging to the network domain 13. For the purposes of illustration only, and without intending to be limiting, these components are assumed to be optic fibers. Alternative implementations of such components could include transceivers for wireless communication, for example, since if a certain path must pass through a particular transceiver pair, disabling such a pair would have a similar effect as cutting fibers. Network domains 14 and 18 may comprise both the optic fiber links, and links formed by other types of transport medium components. However, only fiber optic links are shown in the drawing. The fact that the illustrated links are optical is reflected in the link attribute databases of the domains as a particular value (say, 1) of the first user attribute of the link. Coordination between structures of the link attribute databases and meanings of the values is a responsibility of the UNMS 15. Let us assume that a protected path is to be determined via optical links between an end-point 26 situated in the domain 18, and an end-point 28 in the domain 14. For the purposes of illustration, each link in the drawing is considered to be formed by a single optic fiber and is labeled with the value of the first user attribute ("1") and with a particular letter "A", "B", "C" etc., each letter signifying a particular fiber bundle to which the optic fiber belongs. (Let's assume that the fiber bundle is user attribute #2, and its value is designated by one of the capital letters). In this particular example, the instruction associated with forming the protected path will comprise selection of the optical transmitting medium, i.e. will comprise the first user attribute with value equal 1. The logical condition in the instruction can be therefore written down as follows: "user attribute #1 =1". As can be seen, a number of paths can be routed between the end-points, and among them one (satisfying the instruction) can be considered the main path, while another one should be selected as the alternate path. When selecting the alternate path for a protected path, an alternate instruction may state that fiber bundles which overlap with those used for the main path should be avoided, as previously described. For example, suppose the main path uses the chain of three links respectively marked 1,E; 1,A; 1,K. The alternate path should therefore avoid using fiber bundles marked "E", "A" and "K". The logical condition of the alternate instruction applied for selecting the alternate path can therefore be written down in the following way: "attribute#1 =1, attribute #2 ≠ E,A,K". Based on this instruction, the lowermost path shown in the drawing will be selected as the alternate path.

A more complex instruction, of a type which is particularly preferred for determining protected paths, is "user attribute #1=n, user attribute's #2 values of all links for the main path must be disjoint from the user attribute's #2 values of all links for the alternate path".

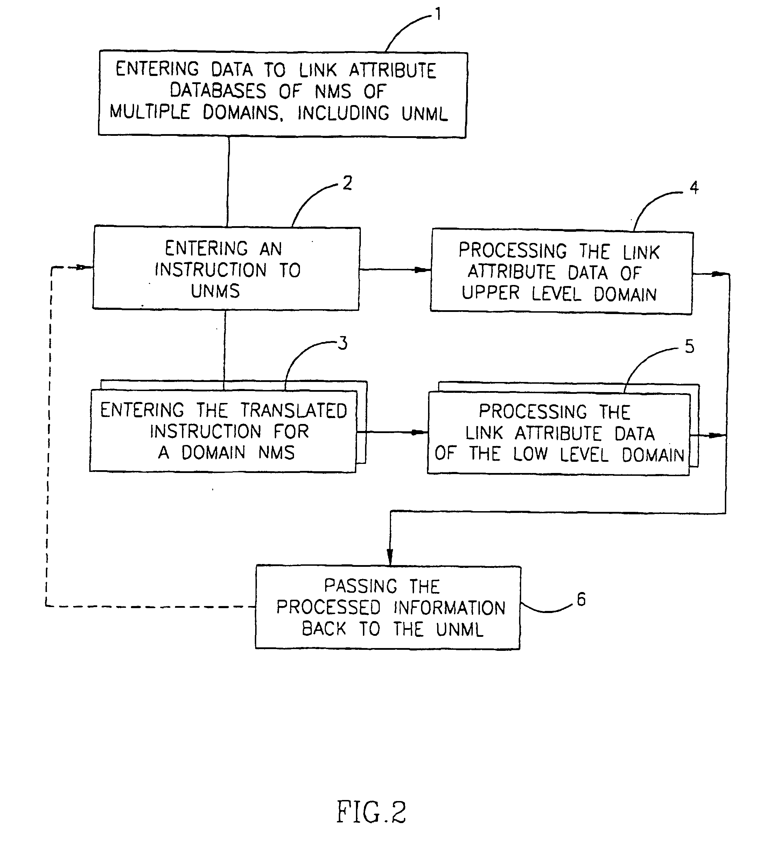

As described also with reference to Figure 2, which is a flowchart of one version of the method of the present invention, the transport medium component information for each link is included in each domain NMS database. In step 1, user attribute items and their values (i.e. link attribute data) of each network domain are entered into its respective database associated with the corresponding NMS. One of the domains, which encompasses the others, is considered a upper level domain, and its NMS serves as a UNMS. It should be noted, that the UNMS must ensure coordination of the link attribute data stored in different domains, so as to be capable of translating meanings of the user attributes and values thereof as stored in one domain to the respective meanings and values stored in another domain.

Next, in step 2, at least one instruction for using at least one user attribute item is entered into a UNMS. For example, the instruction may constitute a path determining instruction. Such an instruction could include for example, "use only links with user attribute #1 = 1", or "do not use links with user attribute #1 =2". A more complex instruction for determining protected paths, may additionally comprise: "user attribute#2 values of all links for the main path must be different from the user attribute#2 values of all links for the alternate path". Another example is an instruction such as "use only links with user attribute # 1 = 1 for the main path and links with user attribute#1 = 2 for the alternate path", for determining the protected path in the network domains 14 and 18.

In yet another example, if fiber bundle "A" is assumed to belong to the family of fiber bundles (attribute #3) designated as "34", then a compound instruction could be used which would state "route the main path through links with user attribute #3 = 34 and route the alternate path through links for which user attribute#2 ≠ 34". Thus, such a compound instruction, would enable both the main path and the alternate path to cross network domains without any danger that the two paths would share transport medium components, since the alternate path would be barred from sharing even the same family of fiber bundles as the main path.

In step 3, UNMS sends one or more instructions to at least one of domain NMSs. Actually, the UNMS could send to the domain NMSs the same instruction after "translating" it into terms and values of the user attributes which are known to the domain database. Optionally and more preferably, one or more instructions could also be sent for determining the main path, either alone or in conjunction with the instruction(s) for determining the alternate path. Thus, the main path would not share any fiber bundle with the alternate path.

The flow chart in Fig.2 illustrates the process where both the upper level domain and the regular domains simultaneously perform the processing according to the applied instructions (steps 4 and 5). Each network domain NMS combines the instructions with information from the associated link attribute database. After the processing is finished (say, the respective path sections are determined in the domains), information on the results is preferably passed to the UNMS (step 6) for checking or for reiterating the process if at least one of the NMSs did not succeed in determining the required path section. In such a case the initial instruction may be reformulated and the process can be repeated from step 2 (the dotted line).

Alternatively, the processing in the upper level domain may precede the processing in other domains in order to provide more information to the lower level domains. Also, the processing in the lower level domains may be accomplished in sequence, though parallel processing is always preferable.

While the invention has been described with respect to a limited number of embodiments, it will be appreciated that many variations, modifications and other applications of the invention may be made.

## Claims

1. A method for management of a network domain (14, 18, 13) formed from network elements interconnected with links, each link comprising at least one transport medium component, the method comprising steps of:
a) providing a network management system (16, 20, 15) for the network domain;
b) providing a link attribute database (22, 24, 17) associated with said network management system and incorporating link attribute data (1,P; 1,D; 1,E; 1,F; 1,K; 1,C; 1,N; 1,A; 1,B) comprising a plurality of user attributes and values thereof assigned to each link existing in the network domain,
c) applying to said link attribute database at least one instruction for processing said link attribute data according to at least one of said user attributes.

2. The method according to Claim 1, wherein
said user attributes being features **characterizing** a link and are selected from a non-exhaustive list comprising: type of the transport medium component, individual identifier of said medium component, group to which said medium component belongs, length, quality, and external distinctive properties of said transport medium component,
said values of the user attributes being respectively indications of the type, identifier and group of the medium component, indication of the length, estimation of the quality, indication of a respective housing of said component, and
said type of the transport medium component being selected from a non-exhaustive list comprising: an optic fiber medium, an electrically conductive medium, a transceiver of a wireless telecommunication link.

3. The method according to Claim 2, wherein said type of the transport medium component is the optic fiber medium (1), and said user attributes respectively designate individual identifier of the optical fiber in a bundle, identifier of the bundle (A,B,C,D,E,F,K,N,P), length of the fiber, quality of the optic link, color of the protection coating of the bundle.

4. The method according to any one of Claims 1 to 3 for determining a path in the network domain, wherein the processing in step (c) comprises determining a path in said network domain, and wherein said instruction orders selection for the path of one or more links according to said at least one user attribute and the instruction comprises a logical condition using said one or more user attributes and their values.

5. A method for routing a protected path in a network domain by determining a main path and an alternate path, the method comprising:
determining the main path according to Claim 4, and
determining the alternate path according to Claim 4, wherein said at least one instruction applied at step (c) is an alternate instruction for preventing the links forming the main path from being included in the alternate path.

6. The method according to Claim 5, wherein said alternate instruction comprises a logical condition using said one or more user attributes and their values.

7. The method according to Claim 6, wherein said logical condition of the alternate instruction prohibits selection, for the alternate path, of links that have values of at least one of the following user attributes in common with the links forming the main path: individual identifier of the medium component, group of said medium components (A,B,C,D,E,F,K,N,P).

8. A method for determining a path in a network composed of multiple network domains (13, 14), the network comprising at least a first network domain (13) and a second network domain (14) having a common border, each formed from network elements interconnected by links; the path connects network elements belonging to different said network domains and includes links each comprising at least one transport medium component, the method comprises:
performing the method according to Claim 4 with respect to said first network domain (13) to determine a first path section (1, A), wherein
said network management system being the first network management system (15) provided for the first network domain (13), said link attribute database being the first link attribute database (17) associated with said first network management system (15) and incorporating the link attribute data concerning a plurality of user attributes and values thereof assigned to each link of said first network domain;
performing the method according to Claim 4 with respect to the second network domain (12) to determine a second path section (1,E) connectable to the first path section, wherein said network management system (16), said link attribute database (22) and said link attribute data being respectively associated with the second network domain (14);
while translating, by the first network management system (15), of user attributes and values thereof assigned in the first network domain (13) to respective user attributes and values thereof assigned in the second network domain (14), to maintain consistency of said user attributes and values thereof, and thereby consistency of said instructions in different network domains of the network; said first network management system (15) serving as an upper-level network management system.

9. A method for determining a path in a network composed of multiple network domains interconnected by a plurality of links existing there-between, the network comprising at least a first low level network domain (14), a second low level network domain (18), each formed from network elements interconnected by links, and an upper level network domain (13) comprising the plurality of links existing between said first and said second low level network domains; the path is to connect network elements respectively belonging to said first and second network domains, and to include links each comprising at least one transport medium component, the method comprising:
performing the method according to Claim 4 with respect to said upper level network domain (13) to determine a connecting path section between the first low level network domain (14) and the second low level network domain (18), wherein
said network management system being an upper-level network management system (15) provided for the upper level network domain, said link attribute database being an upper level link attribute database (17) associated with said upper-level network management system and incorporating upper level link attribute data concerning a plurality of user attributes and values thereof assigned to each link of said upper level network domain (13);
performing the method according to Claim 4 with respect to the first low level network domain (14) to determine the first path section, wherein said network management system (16), said link attribute database (22) and said link attribute data being respectively associated with said first low level network domain (14);
performing the method according to Claim 4 with respect to the second low level network domain (18) to determine the second path section, wherein said network management system (20), said link attribute database (24) and said link attribute data being respectively associated with the second low level network domain (18);
while translating, by said upper-level network management system (15), of user attributes and values thereof assigned in the upper level network domain (13) to respective user attributes and values thereof assigned in the low level network domains (14, 18), to maintain consistency of said user attributes and values thereof, and thereby consistency of said instructions in different network domains of the network.

10. The method according to Claim 8 or 9, also comprising issuing said instructions and providing time scheduling of the method steps by the upper-level network management system (15).

11. The method according to Claim 9 or 10, comprising firstly determining said connecting path section (1,A;1,B,1,C) to obtain border points, and thereupon determining said first and said second path sections simultaneously, using the border points.

12. The method according to Claim 11, comprising re-determining said connecting path if any of said first and second path sections cannot be determined, up to completing the path.

13. A method for determining a protected path in a network comprising multiple network domains, the method comprising determining a main path according to any one of Claims 8 to 12 and further comprising determining an alternate path in addition to the determined main path; the method comprising:
- determining alternate path sections to respective main path sections in each of said network domains, second network domain and upper level network domain, while applying to each of the respective link attribute databases an alternate instruction for preventing the links forming any of the main path sections from being included in any of the alternate path sections.

14. The method according to Claim 13, wherein said alternate instruction comprises a logical condition using said one or more user attributes and their values.

15. The method according to Claim 14, wherein said logical condition of the alternate instruction prohibits selecting, for any alternate path section, links that have values of at least one of the following user attributes in common with the links forming any of the main path sections: individual identifier of the transport medium component (1), group of said transport medium components (A,B,C,D,E,F,K,N,P).

16. A system for routing a protected path between a plurality of network domains (14, 18, 13) in a network, the network comprising at least a first network domain (13) and a second network domain (14), the protected path comprising a main path (1,A, 1,E) and an alternate path (1,B, 1,D), each of the main path and the alternate path being composed of a plurality of links forming respective path sections in the network domains, the system comprising:
(a) a first domain network management system (15) for managing the first network domain (13);
(b) a first link attribute database (17) associated with said first domain network management system (15) for storing link attribute data (1,A;1,B;1,C) comprising a plurality of user attributes and values thereof assigned to each link existing in the first network domain (13);
(c) a second domain network management system (16) for managing the second network domain (14);
(d) a second link attribute database (22) associated with said second domain network management system (16) for storing link attribute data (1,E; 1,D;1,P) comprising a plurality of user attributes and values thereof assigned to each link existing in the second network domain (14);
one of said network management systems (15) serving as an upper-level network management system capable of maintaining consistency between said user attributes and values thereof in the first (13) and second (14) databases, and of applying to both of said network domains one instruction to determine in each of them a main path section and an alternate path section according to said at least one user attribute, said at least one instruction determining whether to include a particular link in any of the alternate path sections, such that none of the alternate path sections share a transport medium component used in any of the main path sections.

## Patentansprüche

1. Verfahren zum Verwalten eines Netzbereichs (14, 18, 13), der aus mit Links verbundenen Netzelementen gebildet ist, wobei jede Link wenigstens eine Transportmedienkomponente umfasst, wobei das Verfahren die folgenden Schritte umfasst:
a) Bereitstellen eines NMS (Netzmanagementsystem) (16, 20, 15) für den Netzbereich;
b) Bereitstellen einer Link-Attributdatenbank (22, 24, 17), die mit dem genannten Netzmanagementsystem assoziiert ist und Link-Attributdaten (1,P; 1,D; 1,E; 1,F; 1,K; 1,C; 1,N; 1,A; 1,B) enthält, umfassend eine Mehrzahl von Benutzerattributen und Werten davon, die jeder im Netzbereich existierenden Link zugewiesen wurde,
c) Anwenden von wenigstens einer Anweisung zum Verarbeiten der genannten Link-Attributdaten gemäß wenigstens einem der genannten Benutzerattribute auf die genannte Link-Attributdatenbank.

2. Verfahren nach Anspruch 1, bei dem
die genannten Benutzerattribute Merkmale sind, die eine Link charakterisieren und die aus einer nicht erschöpfenden Liste ausgewählt wurden, die Folgendes umfasst: Typ der Transportmedienkomponente, individuelle Kennung der genannten Medienkomponente, die Gruppe, zu der die genannte Medienkomponente gehört, Länge, Qualität und externe kennzeichnende Eigenschaften der genannten Transportmedienkomponente,
wobei die genannten Werte der Benutzerattribute jeweils Indikationen für den Typ, die Kennung und die Gruppe der Medienkomponente, eine Indikation der Länge, eine Schätzung der Qualität, eine Indikation eines jeweiligen Gehäuses der genannten Komponente sind, und
der genannte Typ der Transportmedienkomponente aus einer nicht erschöpfenden Liste ausgewählt wird, die Folgendes umfasst; ein optisches Fasermedium, ein elektrisch leitendes Medium, einen Transceiver einer drahtlosen Telekommunikationsverbindung.

3. Verfahren nach Anspruch 2, bei dem der genannte Typ der Transportmedienkomponente das optische Fasermedium (1) ist und wobei die genannten Benutzerattribute jeweils eine individuelle Kennung der optischen Faser in dem Bündel, eine Kennung für Bündel (A,B,C,D,E,F,K,N,P), Länge der Faser, Qualität der optischen Verbindung, Farbe des Schutzüberzugs des Bündels bezeichnen,

4. Verfahren nach einem der Ansprüche 1 bis 3 zum Bestimmen eines Pfades in dem Netzbereich, wobei die Verarbeitung in Schritt (c) die Bestimmung eines Pfades in dem genannten Netzbereich umfasst, und wobei die genannte Anweisung eine Auswahl für den Pfad von einer oder mehreren Links gemäß dem genannten wenigstens einen Benutzerattribut befiehlt, und die Anweisung umfasst eine logische Bedingung unter Verwendung der genannten ein oder mehreren Benutzerattribute und deren Werte.

5. Verfahren zum Leiten eines geschützten Pfades in einem Netzbereich durch Bestimmen eines Hauptpfades und eines Ausweichpfades, wobei das Verfahren Folgendes umfasst:
- Bestimmen des Hauptpfades nach Anspruch 4, und
- Bestimmen des Ausweichpfades nach Anspruch 4, wobei die genannte wenigstens eine Anweisung, die in Schritt (c) angewendet wird, eine Ausweichanweisung ist, um zu verhindern, dass die den Hauptpfad bildenden Links in den Ausweichpfad einbezogen werden.

6. Verfahren nach Anspruch 5, bei dem die genannte Ausweichanweisung eine logische Bedingung unter Verwendung der genannten ein oder mehreren Benutzerattribute und ihrer Werte umfasst.

7. Verfahren nach Anspruch 6, bei dem die genannte logische Bedingung der Ausweichanweisung die Auswahl von Links für den Ausweichpfad verbietet, die Werte von wenigstens einem der folgenden Benutzerattribute gemeinsam mit den Links haben, die den Hauptpfad bilden: eine individuelle Kennung der Medienkomponente, Gruppe der genannten Medienkomponenten (A,B,C,P,E,F,K,N,P).

8. Verfahren zum Bestimmen eines Pfades in einem Netz, das sich aus mehreren Netzbereichen (13, 14) zusammensetzt, wobei das Netz wenigstens einen ersten Netzbereich (13) und einen zweiten Netzbereich (14) mit einer gemeinsamen Grenze umfasst, die jeweils von durch Links verbundenen Netzelementen gebildet werden; wobei der Pfad Netzelemente verbindet, die zu verschiedenen genannten Netzbereichen gehören, und Links beinhaltet, die jeweils wenigstens eine Transportmedienkomponente umfassen, wobei das Verfahren die folgenden Schritte umfasst:
Durchführen des Verfahrens nach Anspruch 4 in Bezug auf den genannten ersten Netzbereich (13) zum Bestimmen eines ersten Pfadabschnitts (1,A), wobei
das genannte Netzmanagementsystem das erste für den ersten Netzbereich (13) bereitgestellte Netzmanagementsystem (15) ist, wobei die genannte Link-Attributdatenbank die erste Link-Attributendatenbank (17) ist, die mit dem genannten ersten Netzmanagementsystem (15) assoziiert ist und die Link-Attributdaten über eine Mehrzahl von Benutzerattributen und Werten davon beinhaltet, die jeder Link des genannten ersten Netzbereiches zugewiesen wurden;
Durchführen des Verfahrens nach Anspruch 4 in Bezug auf den zweiten Netzbereich (12) zum Bestimmen eines zweiten Pfadabschnitts (1,E), der mit dem ersten Pfadabschnitt verbunden werden kann, wobei das genannte Netzmanagementsystem (16), die genannte Link-Attributdatenbank (22) und die genannten Link-Attributdaten jeweils mit dem genannten zweiten Netzbereich (14) assoziiert sind;
während des Übersetzens, durch das erste Netzmanagementsystem (15), von Benutzerattributen und Werten davon, die im ersten Netzbereich (13) zugewiesen wurden, in jeweilige Benutzerattribute und Werte davon, die im zweiten Netzbereich (14) zugewiesen wurden, um die Einheitlichkeit der genannten Benutzerattribute und deren Werte und somit die Einheitlichkeit der genannten Anweisungen in verschiedenen Netzbereichen des Netzwerkes zu bewahren; wobei das genannte erste Netzmanagementsystem (15) als Upper-Level-Netzmanagementsystem dient.

9. Verfahren zum Bestimmen eines Pfades in einem Netz, das sich aus mehreren Netzbereichen zusammensetzt, die durch eine Mehrzahl von dazwischen existierenden Links verbunden sind, wobei das Netz wenigstens einen ersten Low-Level-Netzbereich (14), einen zweiten Low-Level-Netzbereich (18), die jeweils aus durch Links verbundenen Netzelementen gebildet werden, und einen Upper-Level-Netzbereich (13) umfasst, umfassend die Mehrzahl von Links, die zwischen dem genannten ersten und dem genannten zweiten Low-Level-Netzbereich existieren, wobei der Pfad die Aufgabe hat, Netzelemente, die jeweils zu dem genannten ersten und dem genannten zweiten Netzbereich gehören, zu verbinden und Links einzubeziehen, die jeweils wenigstens bereich gehören, zu verbinden und Links einzubeziehen, die jeweils wenigstens eine Transportmedienkomponente umfassen, wobei das Verfahren umfasst:
Durchführen des Verfahrens nach Anspruch 4 in Bezug auf den genannten Upper-Level-Netzbereich (13) zum Bestimmen eines Verbindungspfadabschnittes zwischen dem ersten Low-Level-Netzbereich (14) und dem zweiten Low-Level-Netzbereich (18), wobei
das genannte Netzmanagementsystem ein Upper-Level-Netzmanagementsystem (15) ist, das für den Upper-Level-Netzbereich bereitgestellt wurde, wobei die genannte Link-Attributdatenbank eine Upper-Level-Link-Attributdatenbank (17) ist, die mit dem genannten Upper-Level-Netzmanagementsystem assoziiert ist und Upper-Level-Link-Attributdaten über eine Mehrzahl von Benutzerattributen und Werten davon beinhaltet, die jeder Link des genannten Upper-Level-Netzbereichs (13) zugewiesen wurden;
Durchführen des Verfahrens nach Anspruch 4 mit Bezug auf den ersten Low-Level-Netzbereich (14) zum Bestimmen des ersten Pfadabschnitts, wobei das genannte Netzmanagementsystem (16), die genannte Link-Attributdatenbank (22) und die genannten Link-Attributdaten jeweils mit dem genannten ersten Low-Level-Netzbereich (14) assoziiert sind;
Durchführen des Verfahrens nach Anspruch 4 mit Bezug auf den zweiten Low-Level-Netzbereich (18) zum Bestimmen des zweiten Pfadabschnitts, wobei das genannte Netzmanagementsystem (20), die genannte Link-Attributdatenbank (24) und die genannten Link-Attributdaten jeweils mit dem zweiten Low-Level-Netzbereich (18) assoziiert sind;
während des Übersetzens, durch das genannte Upper-Level-Netzmanagementsystem (15), von Benutzerattributen und Werten davon, die in den Upper-Level-Netzbereichen (13) zugewiesen wurden, in jeweilige Benutzerattribute und Werte davon, die in den Low-Level-Netzbereichen (14, 18) zugewiesen wurden, und um die Einheitlichkeit der genannten Benutzerattribute und Werte davon und somit die Einheitlichkeit der genannten Anweisungen in verschiedenen Netzbereichen des Netzwerks zu bewahren.

10. Verfahren nach Anspruch 8 oder 9, ebenso umfassend die Ausgabe der genannten Befehle und die Bereitstellung eines Zeitplans der Verfahrensschritte durch das Upper-Level-Netzmanagementsystem (15).

11. Verfahren nach Anspruch 9 oder 10, umfassend erstens das Bestimmen des genannten Verbindungspfadabschnitts (1,A; 1,B; 1,C) zum Erhalten von Grenzpunkten und danach das gleichzeitige Bestimmen des genannten ersten und des genannten zweiten Pfadabschnitts unter Verwendung der Grenzpunkte.

12. Verfahren nach Anspruch 11, umfassend die Neubestimmung des genannten Verbindungspfades, wenn irgendwelche der genannten ersten und zweiten Pfadabschnitte bis zur Vollendung des Pfads nicht bestimmt werden können.

13. Verfahren zum Bestimmen eines geschützten Pfades in einem Netzwerk, umfassend mehrere Netzbereiche, wobei das Verfahren das Bestimmen eines Hauptpfades nach einem der Ansprüche 8 bis 12 umfasst, und ferner umfassend das Bestimmen eines alternativen Pfades zusätzlich zu dem bestimmten Hauptpfad, wobei das Verfahren die folgenden Schritte umfasst:
- Bestimmen von Ausweichpfadabschnitten zu jeweiligen Hauptpfadabschnitten in jedem der genannten Netzbereiche, dem zweiten Netzbereich und dem Upper-Level-Netzbereich, während auf jede der jeweiligen Link-Attributdatenbanken eine Ausweichanweisung angewendet wird, um zu verhindern, dass die einen der Hauptpfadabschnitte bildenden Links in einen der Ausweichpfadabschnitte einbezogen werden.

14. Verfahren nach Anspruch 13, bei dem die genannte Ausweichanweisung eine logische Bedingung unter Verwendung der genannten ein oder mehreren Benutzerattribute und deren Werte umfasst.

15. Verfahren nach Anspruch 14, bei dem die genannte logische Bedingung der Ausweichanweisung das Auswählen von Links für irgendeinen Ausweichpfadabschnitt verbietet, die Werte von wenigstens den folgenden Benutzerattributen gemeinsam mit den Links haben, die einen der Hauptpfadabschnitte bilden: individuelle Kennung der Transportmedienkomponente (1), Gruppe der genannten Transportmedienkomponenten (A,B,C,D,E,F,K,N,P).

16. System zum Leiten eines geschützten Pfades zwischen einer Mehrzahl von Netzbereichen (14, 18, 13) in einem Netzwerk, wobei das Netzwerk wenigstens einen ersten Netzbereich (13) und einen zweiten Netzbereich (14) umfasst, wobei der geschützte Pfad einen Hauptpfad (1,A, 1,E) und einen Ausweichpfad (1,B, 1,D) umfasst, wobei sowohl der Hauptpfad als auch der Ausweichpfad von einer Mehrzahl von Links gebildet werden, die jeweilige Pfadabschnitte in den Netzbereichen bilden, wobei das System Folgendes umfasst:
(a) ein erstes Bereichs-Netzwerkmanagementsystem (15) zum Verwalten des ersten Netzbereichs (13);
(b) eine erste Link-Attributdatenbank (17) in Verbindung mit dem genannten ersten Bereichs-Netzmanagementsystem (15) zum Speichern von Link-Attributdaten (1.A; 1,B; 1,C), umfassend eine Mehrzahl von Benutzerattributen und Werten davon, die jeder im ersten Netzbereich (13) existierenden Link zugewiesen sind;
(c) ein zweites Bereichs-Netzmanagementsystem (16) zum Verwalten des zweiten Netzbereichs (14);
(d) eine zweite Link-Attributdatenbank (22) in Verbindung mit dem genannten zweiten Bereichs-Netzmanagementsystem (16) zum Speichem von Link-Attributdaten (1,E; 1,D; 1,P), umfassend eine Mehrzahl von Benutzerattributen und Werten davon, die jeder in dem genannten zweiten Netzbereich (14) existierenden Link zugewiesen wurden;
wobei eines der genannten Netzmanagementsysteme (15) als Upper-Level-Netzmanagementsystem dient, das die Einheitlichkeit zwischen den genannten Benutzerattributen und Werten davon in der ersten (13) und der zweiten (14) Datenbank bewahren und auf beide genannten Netzbereiche eine Anweisung anwenden kann, um in jedem davon einen Hauptpfadabschnitt und einen Ausweichpfadabschnitt gemäß dem genannten wenigstens einen Benutzerattribut zu bestimmen, wobei die genannte wenigstens eine Anweisung bestimmt, ob eine bestimmte Link in einen der Ausweichpfadabschnitte einbezogen werden soll, so dass keiner der Ausweichpfadabschnitte eine in einem der Hauptpfadabschnitte verwendete Transportmedienkomponente mitbenutzt.

## Revendications

1. Méthode de gestion d'un domaine de réseau (14, 18, 13) constitué d'éléments de réseau interconnectés par des liens, chaque lien comprenant au moins un composant de support de transport, cette méthode mettant en jeu les étapes suivantes :
a) fournir un NMS (un système de gestion de réseau) (16, 20, 15) pour le domaine de réseau ;
b) fournir une base de données d'attributs de liens (22, 24, 17) associée audit système de gestion de réseau, qui intègre des données d'attributs de liens (1,P; 1,D; 1,E; 1,F; 1,K; 1,C; 1,N; 1,A; 1,B) comprenant une multiplicité d'attributs d'utilisateur et leurs valeurs attribués à chaque lien existant dans le domaine de réseau.
c) appliquer à ladite base de données d'attributs de liens au moins une instruction pour traiter les données d'attributs de liens suivant au moins l'un desdits attributs d'utilisateur.

2. Méthode selon la revendication 1, dans laquelle
lesdits attributs d'utilisateur sont des caractéristiques d'un lien et sont sélectionnés à partir d'une liste non exhaustive comprenant : le type du composant de support de transport, une identité individuelle pour ce composant, le groupe auquel ledit composant de support appartient, la longueur, la qualité, et les propriétés externes distinctives dudit composant de support de transport,
lesdites valeurs des attributs d'utilisateur sont respectivement des indications du type, de l'identité et du groupe du composant de support, une indication de longueur, une estimation de qualité, une indication d'une enveloppe respective dudit composant, et
ledit type du composant de support de transport est sélectionné à partir d'une liste non exhaustive comprenant ; un support en fibres optiques, un support conducteur d'électricité, un émetteur-récepteur de liaison de télécommunications sans fil.

3. Méthode selon la revendication 2, où ledit type de composant de support de transport est le support en fibres optiques (1), et où lesdits attributs d'utilisateur désignent respectivement l'identité individuelle de la fibre optique dans le faisceau, l'identité du faisceau (A,B,C,D,E,F,K,N,P), la longueur de la fibre, la qualité de la liaison optique, la couleur du revêtement de protection du faisceau.

4. Méthode selon l'une quelconque des revendications 1 à 3 permettant de déterminer un chemin dans le domaine de réseau, où le traitement à l'étape (c) met en jeu la détermination d'un chemin dans ledit domaine de réseau et où ladite instruction ordonne la sélection pour le chemin d'un ou plusieurs liens conformément à l'au moins un attribut d'utilisateur; et l'instruction fait intervenir une condition logique utilisant le ou les attributs d'utilisateur et leurs valeurs.

5. Méthode d'établissement d'un chemin protégé dans un domaine de réseau en déterminant un chemin principal et un chemin de remplacement, cette méthode comprenant :
- la détermination du chemin principal conformément à la revendication 4, et
- la détermination du chemin de remplacement conformément à la revendication 4, dans le cadre de laquelle l'au moins une instruction appliquée à l'étape (c) est une instruction de remplacement pour empêcher que les liens constituant le chemin principal soient inclus dans le chemin de remplacement.

6. Méthode selon la revendication 5, suivant laquelle l'instruction de remplacement comporte une condition logique utilisant le ou les attributs d'utilisateur et leurs valeurs.

7. Méthode selon la revendication 6, suivant laquelle ladite condition logique de l'instruction de remplacement interdit la sélection, pour le chemin de remplacement, de liens qui ont des valeurs d'au moins un des attributs d'utilisateur suivants en commun avec les liens constituant le chemin principal : identité individuelle du composant de support, groupe desdits composants de support (A,B,C,D,E,F,K,N,P).

8. Méthode pour déterminer un chemin dans un réseau composé de plusieurs domaines de réseau (13, 14), le réseau, comprenant au moins un premier domaine de réseau (13) et un deuxième domaine de réseau (14) ayant une frontière commune, chacun étant formé d'éléments de réseau interconnectés par des liens; le chemin reliant des éléments de réseau appartenant aux différents domaines de réseau mentionnés et comportant des liens comprenant chacun au moins un composant de support de transport, la méthode faisant intervenir :
l'exécution de la méthode selon la revendication 4 pour ledit premier domaine de réseau (13) pour déterminer une première section de chemin (1,A), dans laquelle
ledit système de gestion de réseau est le premier système de gestion de réseau (15) prévu pour le premier domaine de réseau (13), ladite base de données d'attributs de liens est la première base de données d'attributs de liens (17) associée audit premier système de gestion de réseau (15) et intègre les données d'attributs de liens concernant une multiplicité d'attributs d'utilisateur et leurs valeurs, attribués à chaque lien dudit premier domaine de réseau ;
l'exécution de la méthode selon la revendication 4 pour le deuxième domaine de réseau (12) pour déterminer une deuxième section de chemin (1,E) pouvant être connectée à la première section de chemin, dans laquelle ledit système de gestion de réseau (16), ladite base de données d'attributs de liens (22) et lesdites données d'attributs de liens sont respectivement associés au deuxième domaine de réseau (14);
tout en traduisant, par le premier système de gestion de réseau (15), des attributs d'utilisateur et leurs valeurs attribués dans le premier domaine de réseau (13), en attributs d'utilisateur respectifs et leurs valeurs attribués dans le deuxième domaine de réseau (14), pour maintenir la cohérence desdits attributs d'utilisateur et de leurs valeurs et, partant de là, la cohérence desdites instructions dans différents domaines de réseau du réseau; ledit premier système de gestion de réseau (15) remplissant la fonction d'un système de gestion de réseau de niveau supérieur.

9. Une méthode permettant de déterminer un chemin dans un réseau composé de plusieurs domaines de réseau interconnectés par une multiplicité de liens existant entre eux, le réseau comportant au moins un premier domaine de réseau de bas niveau (14), un deuxième domaine de réseau de bas niveau, (18) chacun formé d'éléments de réseau interconnectés par des liens et un domaine de réseau de niveau supérieur (13) comprenant la multiplicité de liens existant entre lesdits premier et deuxième domaines de réseau de bas niveau ; le chemin visant à connecter des éléments de réseau appartenant respectivement auxdits premier et deuxième domaines de réseau et à inclure des liens comprenant chacun au moins un composant de support de transport ; la méthode faisant intervenir :
l'exécution de la méthode selon la revendication 4 pour ledit domaine de réseau de niveau supérieur (13) pour déterminer une section de chemin de connexion entre le premier domaine de réseau de bas niveau (14) et le deuxième domaine de réseau de bas niveau (18), où
ledit système de gestion de réseau est un système de gestion de réseau de niveau supérieur (15) prévu pour le domaine de réseau de niveau supérieur, ladite base de données d'attributs de liens est une base de données d'attributs de liens de niveau supérieur (17) associée audit système de gestion de réseau de niveau supérieur et intègre des données d'attributs de liens de niveau supérieur concernant une multiplicité d'attributs d'utilisateur et leurs valeurs attribués à chaque lien du domaine de réseau de niveau supérieur (13);
l'exécution de la méthode selon la revendication 4 pour le premier domaine de réseau de bas niveau (14) pour déterminer la première section de chemin, dans laquelle ledit système de gestion de réseau (16), ladite base de données d'attributs de liens (22) et lesdites données d'attributs de liens sont respectivement associés audit premier domaine de réseau de bas niveau (14) ;
l'exécution de la méthode selon la revendication 4 pour le deuxième domaine de réseau de bas niveau (18) pour déterminer la deuxième section de chemin dans laquelle ledit système de gestion de réseau (20), ladite base de données d'attributs de liens (24) et lesdites données d'attributs de liens sont respectivement associés au deuxième domaine de réseau de bas niveau (18) ;
tout en traduisant, par ledit système de gestion de réseau de niveau supérieur (15), des attributs d'utilisateur et leurs valeurs attribués dans le domaine de réseau de niveau supérieur (13), en attributs d'utilisateur respectifs et leurs valeurs attribués dans les domaines de réseau de bas niveau (14,18), pour maintenir la cohérence desdits attributs d'utilisateur et de leurs valeurs et, partant de là, la cohérence desdites instructions dans différents domaines de réseau du réseau.

10. Méthode selon la revendication 8 ou 9 comprenant aussi l'émission desdites instructions et une planification des étapes de la méthode par le système de gestion de réseau de niveau supérieur (15).

11. Méthode selon la revendication 9 ou 10, comprenant, premièrement, la détermination de ladite section de chemin de connexion (1,A; 1,B; 1,C) pour obtenir des points frontières, et ensuite la détermination simultanée desdites première et deuxième sections de chemin au moyen des points frontières.

12. Méthode selon la revendication 11, comprenant la re-détermination dudit chemin de connexion si l'une quelconque desdites première et deuxième sections de chemin ne peut pas être déterminée, jusqu'à ce que le chemin soit établi.

13. Méthode pour déterminer un chemin protégé dans un réseau comprenant de multiples domaines de réseau, la méthode comprenant la détermination d'un chemin principal conformément à l'une quelconque des revendications 8 à 12 et comprenant en outre la détermination d'un chemin de remplacement en plus du chemin principal déterminé; la méthode comprenant :
- la détermination de sections de chemin de remplacement pour des sections de chemin principal respectives dans chacun desdits domaines de réseau, deuxième domaine de réseau et domaine de réseau de niveau supérieur, tout en appliquant à chacune des bases de données d'attributs de liens respectives une instruction de remplacement pour empêcher l'inclusion de liens constituant l'une quelconque des sections de chemin principal, dans l'une quelconque des sections de chemin de remplacement.

14. Méthode selon la revendication 13 suivant laquelle ladite instruction de remplacement comporte une condition logique utilisant le ou les attribut(s) d'utilisateur et leurs valeurs.

15. Méthode selon la revendication 14 suivant laquelle la condition logique de l'instruction de remplacement interdit la sélection, pour toute section de chemin de remplacement, de liens ayant des valeurs d'au moins un des attributs d'utilisateur suivants en commun avec les liens formant l'une quelconque des sections de chemin principal : identité individuelle du composant de support de transport (1), groupe des composants de support de transport (A,B,C,D,E,F,K,N,P).

16. Système pour établir un chemin protégé entre une multiplicité de domaines de réseau (14, 18, 13) dans un réseau, ce dernier comportant au moins un premier domaine de réseau (13) et un deuxième domaine de réseau (14), le chemin protégé comportant un chemin principal (1,A, 1,E) et un chemin de remplacement (1,B, 1,D), chacun du chemin principal et du chemin de remplacement étant composé d'une multiplicité de liens formant des sections de chemin respectives dans les domaines de réseau, le système comportant :
(a) un premier système de gestion de réseau de domaine (15) pour gérer le premier domaine de réseau (13) ;
(b) une première base de données d'attributs de liens (17) associée audit premier système de gestion de réseau de domaine (15) pour stocker des données d'attributs de liens (1,A;1,B:1,C), comprenant une multiplicité d'attributs d'utilisateur et leurs valeurs attribués à chaque lien existant dans le premier domaine de réseau (13) ;
(c) un deuxième système de gestion de réseau de domaine (16) pour gérer le deuxième domaine de réseau (14) ;
(d) une deuxième base de données d'attributs de liens (22) associée audit deuxième système de gestion de réseau de domaine (16) pour stocker des données d'attributs de liens (1,E; 1,D; 1,P), comprenant une multiplicité d'attributs d'utilisateur et leurs valeurs attribués à chaque lien existant dans le deuxième domaine de réseau (14) ;
l'un desdits systèmes de gestion de réseau (15) remplissant la fonction d'un système de gestion de réseau de niveau supérieur capable de maintenir la cohérence entre lesdits attributs d'utilisateur et leurs valeurs dans les première (13) et deuxième (14) bases de données, et d'appliquer aux deux domaines de réseau mentionnés une instruction pour déterminer dans chacun d'eux une section de chemin principal et une section de chemin de remplacement conformément à l'au moins un attribut d'utilisateur, l'au moins une instruction déterminant s'il faut inclure un lien particulier dans l'une quelconque des sections de chemin de remplacement, de façon qu'aucune des sections de chemin de remplacement ne partage un composant de support de transport utilisé dans l'une quelconque des sections de chemin principal.
